# EUROPEAN PATENT SPECIFICATION

(11) **EP 1 325 184 B1**
(45) Date of publication and mention of the grant of the patent: **13.09.2006**
(21) Application number: 01979405.6
(22) Date of filing: 02.10.2001
(51) Int. Cl.: D04H 1/56, D04H 3/16, D04H 5/06, D04H 13/00, D01F 8/14, B32B 5/26

(54) **MELTBLOWN WEB**
MELTBLOWN-VLIESSTOFFBAHN
BANDE REALISEE PAR FUSION-SOUFFLAGE

(30) Priority: 04.10.2000 US 678964
(43) Date of publication of application: 09.07.2003
(73) Proprietor: E. I. du Pont de Nemours and Company, Wilmington, Delaware 19898 (US)
(72) Inventor: RUDISILL, Edgar, N., Nashville, TN 37204 (US); BANSAL, Vishal, Richmond VA 23233 (US); DAVIS, Michael, C., Midlothian, VA 23113 (US)
(74) Representative: Thomson, James B.
(86) International application number: PCT/US2001/030885
(87) International publication number: WO 2002/029145

(56) References cited:
- EP-A- 0 527 489
- WO-A-00/37723
- WO-A-01/09425

## Description

### BACKGROUND OF THE INVENTION

### Field of the Invention

This invention relates to meltblown fibers, meltblown fiber webs, and composite nonwoven fabrics that include meltblown fibers. The meltblown webs of the invention can be incorporated in composite fabrics suited for use in apparel, wipes, hygiene products, and medical wraps.

### Description of Related Art

In a meltblowing process, a nonwoven web is formed by extruding molten polymer through a die and then attenuating and breaking the resulting fibers with a hot, high-velocity gas stream. This process generates short, very fine fibers that can be collected on a moving belt where they bond with each other during cooling. This fiber-to-fiber bonding process can be more effective when a portion of the surface of the fiber is composed of a lower melting temperature material than the material of the rest of the fiber. The low melting temperature material creates increased bonding between filaments for improved sheet integrity, while the higher melting temperature material keeps the filament intact. This bonding material of the meltblown fiber can also be used to more effectively bind this meltblown web to other layers of fibers such as other meltblown webs or spunbonded webs.

U.S. Patent Number 6,057,256 discloses the meltblowing of side-by-side bicomponent fibers onto a collector to form a coherent entangled web. This patent focuses on the preparation of poly(ethylene terephthalate)/polypropylene fibers.

Meltblown fibers have been incorporated into a variety of nonwoven fabrics including composite laminates such as spunbond-meltblown-spunbond ("SMS") composite sheets. In SMS composites, the exterior layers are spunbond fiber layers that contribute strength to the overall composite, while the core layer is a meltblown fiber layer that provides barrier properties. Traditionally, the spunbond and meltblown layers of SMS composites have been made of polypropylene fibers. For certain end use applications, such as medical gowns, it is desirable that SMS composite sheets have good strength and barrier properties, while also being as soft and drapeable as possible. While polypropylene-based SMS fabrics offer good strength and barrier properties, they tend not to be as soft and drapeable as is desirable for apparel products. Polypropylene-based SMS fabrics also have the limitation that they cannot be sterilized with gamma radiation because such fabrics are discolored and weakened when sterilized with gamma radiation, and because gamma radiation sterilization of polypropylene-based SMS fabrics generates unpleasant odors. A polymer fiber or fabric is generally considered to be not radiation sterilizable when sterilization of the fabric with gamma radiation causes a significant reduction in the strength of the fiber or fabric, noticeably changes the appearance of the fiber or fabric, or generates an objectionable odor. This inability to undergo gamma radiation sterilization presents a significant problem for polypropylene-based SMS fabrics because radiation sterilization is commonly used throughout the medical industry.

There is a need for fine polyester meltblown fibers which when formed into webs exhibit adequate strength for further processing and handling, can be bonded to other webs, and are radiation sterilizable.

### BRIEF SUMMARY OF THE INVENTION

The fiber of the present invention is directed to a multiple component meltblown fiber comprising a first fiber portion of between 70% to 98% by weight, based on the total weight of the fiber, of a first polymer component containing at least 80% by weight of polyester polymer and a second fiber portion of between 30% to 2% by weight, based on the total weight of the fiber, of a second polymer component containing at least 20% by weight of polyethylene polymer, and wherein some of the second fiber portion is located along the surface of the fiber.

In another embodiment, the present invention is directed to a web of multiple component meltblown fibers, each of said fibers comprising a first fiber portion of between 70% to 98% by weight, based on the total weight of the fiber, of a first polymer component containing at least 80% by weight of polyester polymer and a second fiber portion of between 30% to 2% by weight, based on the total weight of the fiber, of a second polymer component containing at least 20% by weight of polyethylene polymer, and wherein some of the second fiber portion is located along the surface of the fiber.

In another embodiment, the present invention is directed to a composite sheet comprising a first fibrous layer having a first side and an opposite second side and a second fibrous layer bonded to said first side of said first fibrous layer, with said first fibrous layer being a web comprised of multiple component meltblown fibers, each of said fibers comprising a first fiber portion of between 70% to 98% by weight, based on the total weight of the fiber, of a first polymer component containing at least 80% by weight of polyester polymer and a second fiber portion of between 30% to 2% by weight, based on the total weight of the fiber, of a second polymer component containing at least 20% by weight of polyethylene polymer, and wherein some of the second fiber portion is located along the surface of the fiber and wherein said second fibrous layer is comprised of at least 95% by weight of meltspun polymer fibers. The composite sheet has a basis weight of less than 120 g/m², and a machine direction and a cross direction grab tensile strength of at least 35 N.

### BRIEF DESCRIPTION OF THE DRAWINGS

Figure 1 is a schematic diagram of a cross-section of a melt blowing die for producing meltblown fibers for use in the composite nonwoven fabric of the invention.
Figure 2 is a schematic diagram of a cross-section of an alternative melt-blowing die for producing meltblown fibers for use in the composite nonwoven fabric of the invention.
Figure 3 is a diagrammatical cross-sectional view of a composite nonwoven fabric in accordance with one embodiment of the invention.
Figure 4 is a diagrammatical cross-sectional view of a composite nonwoven fabric in accordance with another embodiment of the invention.

### DETAILED DESCRIPTION OF THE INVENTION

The term "polyolefin" as used herein, is intended to mean any of a series of largely saturated open-chain polymeric hydrocarbons composed only of carbon and hydrogen atoms. Typical polyolefins include polyethylene, polypropylene, polymethylpentene and various combinations of the ethylene, propylene, and methylpentene monomers.

The term "polyethylene" as used herein is intended to encompass not only homopolymers of ethylene, but also copolymers wherein at least 85% of the recurring units are ethylene units.

The term "polyester" as used herein is intended to embrace polymers wherein at least 85% of the recurring units are condensation products of dicarbqxylic acids and dihydroxy alcohols with polymer linkages created by formation of ester units. This includes aromatic, aliphatic, saturated, and unsaturated di-acids and di-alcohols. The term "polyester" as used herein also includes copolymers (such as block, graft, random and alternating copolymers), blends, and modifications thereof. A common example of a polyester is poly(ethylene terephthalate) which is a condensation product of ethylene glycol and terephthalic acid.

The term "meltblown fibers" as used herein, means fibers formed by extruding a molten melt-processible polymer through a plurality of fine, usually circular, capillaries as molten threads or filaments into a high velocity gas (e.g. air) stream. The high velocity gas stream attenuates the filaments of molten polymer material to reduce their diameter to between about 0.5 and 10 microns. Meltblown fibers are generally discontinuous fibers. Meltblown fibers carried by the high velocity gas stream are normally deposited on a collecting surface to form a web of randomly dispersed fibers.

The term "meltspun fibers" as used herein means fibers which are formed by extruding molten melt-processible polymer material as filaments from a plurality of fine, usually circular, capillaries of a spinnerette with the diameter of the extruded filaments then being rapidly reduced. Meltspun fibers are generally continuous and have an average diameter of greater than about 5 microns.

The term "nonwoven fabric, sheet or web" as used herein means a structure of individual fibers or threads that are positioned in a random manner to form a planar material without an identifiable pattern, as in a knitted fabric.

The term "multiple component meltblown web" as used herein means meltblown fibers spun from fine capillaries as molten filaments containing multiple and distinct polymer components, which molten filaments are attenuated by a high velocity gas stream and deposited on a collecting surface as a web of randomly dispersed fibers.

As used herein, the "machine direction" is the long direction within the plane of a sheet, i.e., the direction in which the sheet is produced. The "cross direction" is the direction within the plane of the sheet that is perpendicular to the machine direction.

The present invention is directed to multiple component meltblown fibers that contain a first polymer component and a second, polymer component along at least a portion of the surface of the fibers. These fibers are collected into a web in which the lower melting polymer of the fibers can bond to other fibers that they come in contact with to increase the integrity of the web. These meltblown fibers can also bond to fibers in other web layers when making a composite sheet structure to increase the overall integrity of the composite including resistance to delamination of the meltblown web from the other web layers.

According to the invention, the multiple component meltblown fibers of the invention can be produced according to a conventional meltblowing process. In a meltblowing process, one or more extruders supply melted polymer to a die tip where the polymer is fiberized as it passes through fine capillary openings to form a curtain of filaments. The filaments are pneumatically drawn and normally broken by jets of a gas, preferably air, positioned around the fine capillary openings in the die. The fibers are deposited on a moving belt or screen, a scrim, or another fibrous layer. Fibers produced by melt blowing are generally discontinuous fibers having an effective diameter in the range of about 0.5 to about 10 microns. As used herein, the "effective diameter" of a fiber with an irregular cross section is equal to the diameter of a hypothetical round fiber having the same cross sectional area.

The multiple component fibers in the multiple component meltblown web of the invention are typically discontinuous fibers having an average effective diameter of between about 0.5 micron and 10 microns, and more preferably between about 1 and 6 microns, and most preferably between about 2 and 4 microns. The multiple component meltblown webs of the present invention are formed from at least two polymers simultaneously spun from a spin pack. Preferably, the multiple component meltblown web is a bicomponent web made from two distinct polymer components having different chemical and/or physical properties. The configuration of the bicomponent fibers in the bicomponent web is preferably a side-by-side arrangement in which most of the fibers are made of first and second side-by-side fiber portions each having distinct polymer components that extend for a significant portion of the length of each fiber. Alternatively, the bicomponent fibers can have a sheath/core arrangement wherein the first fiber portion is surrounded by the second fiber portion, a pie-shaped arrangement with the pie slices of different fiber portions, or any other conventional bicomponent fiber structure with the lower melting polymer located along at least a portion of the surface of the fiber.

The multiple component meltblown fibers have a first fiber portion of between 70% to 98% by weight, based on the total weight of the fiber, of a first polymer component and a second fiber portion of between 30% to 2% by weight, based on the total weight of the fiber, of a second polymer component. More preferably, the first fiber portion is between 80% to 98% by weight of said first polymer component and said second fiber portion is between 20% to 2% by weight of said second polymer component, and most preferably the first fiber portion is between 90% to 98% by weight of said first polymer component and said second fiber portion is between 10% to 2% by weight of said second polymer component.

According to the present invention, both of the first and second polymer components can comprise mixtures of polymers, the first polymer component being at least 80% by weight polyester, preferably at least 90% by weight polyester, and the second polymer component being at least 20% by weight polyethylene, preferably at least 50% by weight polyethylene.

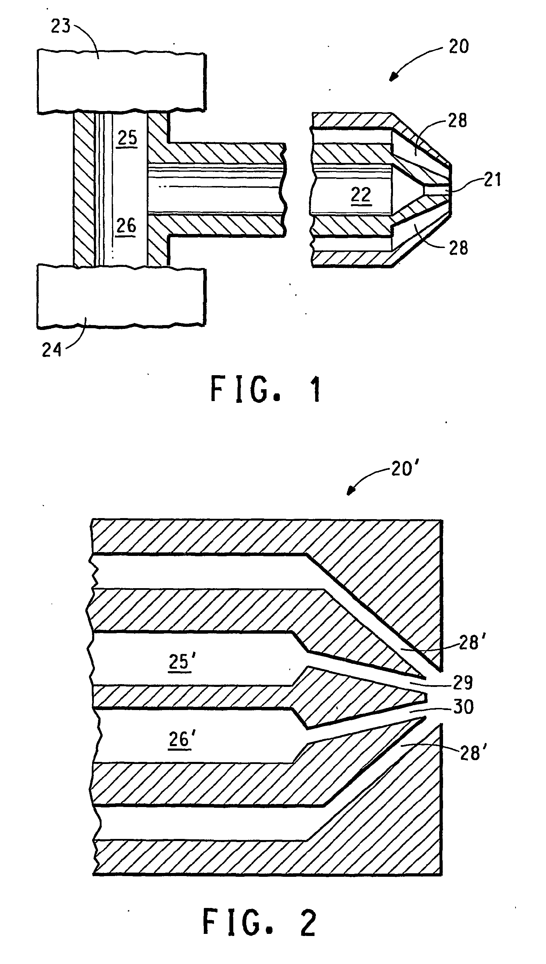

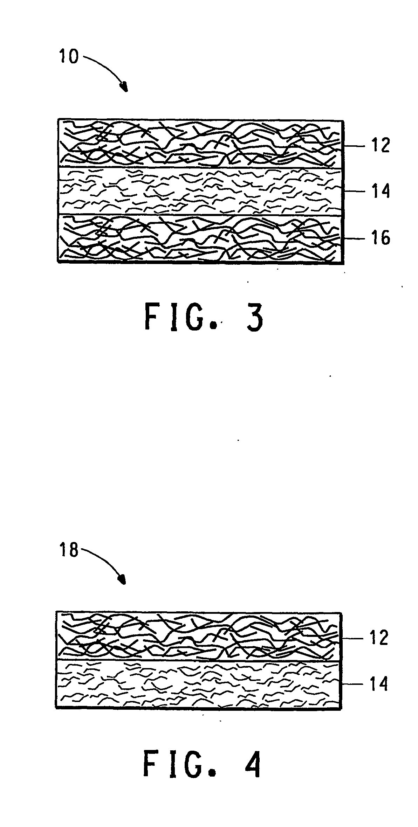

The fibers of the meltblown web of the invention can be meltblown using a meltblowing apparatus having an extrusion die like that shown in Figure 1. In the sectional view of a meltblowing die 20 shown in Figure 1, two different polymeric components are melted in parallel extruders 23 and 24 and metered separately through gear pumps (not shown) and conduits 25 and 26 into the die cavity 22. In the die cavity, the polymer components form a layered mass in which the two components segregate as discrete layers. The layered mass is extruded through a line of capillary orifices 21. A jet of hot air supplied from the channels 28 attenuates the emerging polymer fibers. The resulting fibers are believed to include two filaments, each made of distinct polymer components that both extend the length of the meltblown fiber in a side-by-side configuration. The fine fibers of layer 14 (Fig. 3) could alternatively be produced by other known meltblowing processes, as for example by the process wherein an individual air nozzle surrounds each polymer capillary, as disclosed in U.S. Patent No. 4,380,570.

Figure 2 illustrates an alternative extrusion die 20' to that depicted in Fig. 1, for use in the meltblowing process of this invention, which for simplicity illustrates a two component system. Separately controlled multiple extruders (not shown) supply individual melted polymer streams through polymer supply ports 25' and 26' respectively, where the polymers pass through separate extrusion capillaries 29 and 30, which in a preferred embodiment are angled within the die so as to direct the individual polymer streams toward a common longitudinal axis. However, the extrusion capillaries may be parallel to one another, but in close enough proximity to each other so as to promote coalescence of the extruded molten polymer streams after exiting from the individual extrusion capillaries 29 and 30. The extruded polymer streams are coalesced, exit the die through a blowing orifice and are fiberized to form a curtain of filaments by a blowing gas, supplied through gas jets 28', which are directed toward the common longitudinal axis of the extruded polymer streams. In this process, through the use of separately controlled extruders for the different polymer components, it is possible to individually control the processing parameters, such as temperature, capillary diameter and extrusion pressure, for each polymer component so as to optimize the extrusion of the individual polymers and yet still form single fibers that comprise both polymer components.

Those skilled in the art will recognize that the designs of the melt blowing dies of Figs. 1 and 2 can be readily modified to produce sheath/core multicomponent fibers, segmented pie-shaped multicomponent fibers, etc.

A composite nonwoven sheet incorporating the meltblown web of the invention is shown in Figure 3. The sheet 10 is a three layer composite fabric in which an inner layer 14 is comprised of very fine meltblown polymer fibers sandwiched between outer layers 12 and 16, which are each comprised of larger and stronger bonded fibers. The very fine fibers of inner layer 14, when formed into the layer 14, produce a barrier layer with extremely fine passages. The layer 14 acts as a barrier to fluids but does not prevent the passage of moisture vapor. The bonded fiber layers 12 and 16 are comprised of coarser and stronger fibers that contribute strength, and in some instances barrier properties, to the composite sheet. A composite sheet may alternatively be formed as a two layer composite 18, as shown in Figure 4. In the two layer composite sheet, the fine meltblown fiber layer 14 is attached on just one side to the coarser and stronger bonded layer 12. According to alternative embodiments of the invention, the composite sheet may be made with multiple layers of fine meltblown fibers like the layer 14, or it may be made with more than two layers of coarser and stronger fiber layers like the layers 12 and 16.

The larger and stronger bonded fibers of the layers 12 and 16 are preferably conventional meltspun fibers or some other type of strong spunbond fiber. Preferably, the meltspun fibers are substantially continuous fibers. Alternatively, the layers 12 and 16 could be an air-laid or wet-laid staple fiber web or a carded web wherein the fibers are bonded to each other to form a strong web structure. The fibers of layers 12 and 16 should be made of a polymer to which polyethylene-containing fine fibers of the core layer 14 can readily bond. The fibers of layers 12 and 16 are preferably gamma radiation sterilizable in that they have an outer layer comprised of a polymer other than polypropylene, such as polyester, polyethylene, polyamide, or some combination thereof. Where the composite fabric will not be used in end use applications where radiation sterilization is used, the fibers of layers 12 and 16 could also be comprised of a polymer such as polypropylene that is not gamma radiation sterilizable.

Preferably, the larger and stronger fibers of the layers 12 and 16 of are substantially continuous spunbonded fibers produced using a high speed melt spinning process, such as the high speed spinning processes disclosed in U.S. Patent Nos. 3,802,817, 5,545,371, and 5,885,909. These fibers can be produced as single component fibers, as multiple component fibers, or some combination thereof. Multicomponent fibers can be made in various known cross-sectional configurations, including side-by-side, sheath-core, segmented pie, or islands-in-the-sea configurations.

A preferred meltspun fiber for the layers 12 and 16 is a bicomponent fiber comprised of polyester and polyethylene. The polyester component contributes to the strength to the fabric while the polyethylene component makes the fabric softer and more drapable. In addition, the polyethylene component has a lower melting temperature than the polyester component of the fiber so as to make the layers 12 and 16 more readily bondable to the fine meltblown fibers of the core layer 14 using a thermal bonding process. Alternatively, layers 12 and 16 could be comprised of a blend of single polymer component fibers, as for example, a spunbond web wherein a portion of the fibers are polyethylene fibers and a portion of the fibers are polyester fibers.

A composite nonwoven fabric incorporating the bicomponent meltblown web described above can be produced in-line using an apparatus according to U.S. Patents 3,802,817, 5,545,371 or 5,885,909, in combination with a meltblowing apparatus incorporating the melt-blowing dies depicted in Figs. 1 or 2. Alternatively, the layers of the composite sheet can be produced independently and later combined and bonded to form the composite sheet. More than one spunbond web production apparatus can be used in series to produce a web made of a blend of different single or multiple component fibers, and more than one meltblown web production section can be used in series in order to produce composite sheets with multiple meltblown layers. It is further contemplated that the polymer(s) used in the various web production sections can be different from each other.

Where a second spunbond web layer is desired, substantially continuous spunbond fibers from a second spunbond web production apparatus are deposited onto the meltblown layer 14 (Fig. 3) so as to form a second spunbond layer 16 of the composite sheet. The spunbond layers 12 and 16 do not necessarily have to have the same thickness or basis weight.

The spunbond-meltblown-spunbond web structure can be passed between thermal bonding rolls in order to produce the composite nonwoven web 10 which is collected on a roll. Preferably, bonding rolls are heated rolls maintained at a temperature within plus or minus 20° C of the lowest melting temperature polymer in the composite. For the polyethylene-containing composite sheet of the invention, a bonding temperature in the range of 115-120 °C and a bonding pressure in the range of 350-700 N/cm has been applied to obtain good thermal bonding. Alternative methods for bonding the layers of the composite sheet include calender bonding, through-air bonding, steam bonding, and adhesive bonding.

Optionally, a fluorochemical coating can be applied to the composite nonwoven web to reduce the surface energy of the fiber surface and thus increase the fabric's resistance to liquid penetration. For example, the fabric can be treated with a topical finish treatment to improve the liquid barrier and in particular, to improve barrier to low surface tension liquids. Many topical finish treatment methods are well-known in the art and include spray application, roll coating, foam application, dip-squeeze application, etc. Typical finish ingredients include ZONYL® fluorochemical (aregistered trademark of E. I. du Pont de Nemours and Company, Wilmington, DE) or REPEARL® fluorochemical (available from Mitsubishi Int. Corp, New York, NY). A topical finishing process can be carried out either in-line with the fabric production or in a separate process step. Alternatively, such fluorochemicals could also be spun into the fiber as an ' additive to the melt.

The composite nonwoven sheet according to the present invention preferably has a basis weight in the range of 10 to 120 g/m², and more preferably within the range of 30 to 90 g/m², and most preferably within the range of 50 to 70 g/m². The grab tensile strength of the composite nonwoven sheet can range widely depending on the thermal bonding conditions employed. Typical grab tensile sheet strengths (in both the machine and cross directions) are from 35 to 400 N, and more preferably from 40 to 300 N, and most preferably from 50 to 200 N. The inner meltblown fiber layer of the composite sheet typically has a basis weight of between 2 and 40 g/m², and more preferably between 5 and 30 g/m², and most preferably between 12 and 25 g/m² and a grab tensile strength in both the machine and cross directions of at least 5 N. Each of the outer layers typically has a basis weight between 3 and 50 g/m², and more preferably between 8 and 40 g/m², and most preferably between 12 and 35 g/m². Preferably, the layers of the composite sheet are secured together by thermal bonding, as for example via the melting of a low melting temperature component polymer in the fine fiber layer and/or the larger fiber layers. According to the preferred embodiment of the invention, the composite sheet exhibits a hydrostatic head of at least 10 cm, and more preferably of at least 25 cm, and yet more preferably of at least 45 cm, and most preferably at least 60 cm. It is further preferred that the composite sheet exhibit a water impact of less than 5 g, and more preferably less than 2 g, and most preferably less than 0.5 g. Finally, it is preferred that the composite sheet have a Frazier Air Permeability greater than 1 m³/min/m², and more preferably greater than 5 m³/min/m².

This invention will now be illustrated by the following examples which are intended to illustrate the invention and not to limit the invention in any manner.

### TEST METHODS

In the description above and in the examples that follow, the following test methods were employed to determine various reported characteristics and properties. ASTM refers to the American Society for Testing and Materials.
Fiber Diameter was measured via optical microscopy and is reported as an average value in micrometers.
Basis Weight is a measure of the mass per unit area of a fabric or sheet and was determined by ASTM D-3776, and is reported in g/m².
Grab Tensile Strength is a measure of the breaking strength of a sheet and was conducted according to ASTM D 5034, and is reported in Newtons (N).

### EXAMPLE 1

Meltblown bicomponent fibers were made with a first polymer component of poly(ethylene terephthalate) and a second polymer component of a biconstituent blend of polyethylene/poly(butylene terephthalate). The poly(ethylene terephthalate) component was made from poly(ethylene terephthalate) with an intrinsic viscosity of 0.53 (as measured in U.S. Patent 4,743,504, available from DuPont as Crystar® polyester (Merge 3949). The polyethylene/poly(butylene terephthalate) biconstituent blend component contained 90% by weight linear low density polyethylene with a melt index of 150 g/10 minutes (measured according to ASTM D-1238), available from Dow Chemical Company as ASPUN 6831A and 10% by weight poly(butylene terephthalate), available from Hoechst as Merge 1300A. The presence of the poly(butylene terephthalate) in the blend component improves the spinnability of the polyethylene. The polyethylene/poly(butylene terephthalate) biconstituent blend was prepared by mixing the polyethylene and the poly(butylene terephthalate) in an extruder at 265 °C.

The first and second polymer components were separately extruded, filtered and metered to a bicomponent spin pack arranged to provide a side-by-side filament cross-section. The die of the spin pack was heated to 600 °F (315 °C). The die had 601 capillary openings arranged in a 24 inch (61 cm) line. The polymers were spun through each capillary at a polymer throughput rate of 0.80 g/hole/min. Attenuating air was heated to a temperature of 615° F (323 °C) and supplied at a rate of 425 standard cubic feet per minute (12 m³/min) through two 0.8 mm wide air channels. The two air channels ran the length of the 24 inch line of capillary openings, with one channel on each side of the line of capillaries set back 1mm from the capillary openings. The poly(ethylene terephthalate) was supplied to the spin pack at a rate of 26 kg/hr and the polyethylene/poly(butylene terephthalate) was supplied to the spin pack at a rate of 2.9 kg/hr. A bicomponent meltblown web was produced that was 90 weight percent poly(ethylene terephthalate) and 10 weight percent of a blend containing 90 wt.% polyethylene/10 wt.% poly(butylene terephthalate). The filaments were collected on a moving forming screen to produce a meltblown web. The meltblown web was collected on a roll and had a basis weight of 17 g/m². The grab tensile properties of the web is reported in Table 1.

The spunbond outer layers were bicomponent fibers with a sheath-core cross-section. Spunbond webs with two basis weights (17 g/m² and 24 g/m²) were produced for use in the outer layers of the composite sheet. The spunbond bicomponent fibers were made from linear low density polyethylene with a melt index of 27 g/10 minutes (measured according to ASTM D-1238), available from Dow Chemical Company as ASPUN 6811A, and poly(ethylene terephthalate) polyester with an intrinsic viscosity of 0.63 and weight average molecular weight of approximately 35,700, available from DuPont as Crystar® polyester (Merge 3949). The polyester resin was crystallized at a temperature of 180 °C and dried at a temperature of 120 °C to a moisture content of less than 50 ppm before use.

The poly(ethylene terephthalate) used in the spunbond layers was heated to 290 °C and the polyethylene was heated to 280 °C in separate extruders. The polymers were extruded, filtered and metered to a bicomponent spin pack maintained at 295 °C and designed to provide a sheath-core filament cross section. The polymers were spun through the spinneret to produce bicomponent filaments with a polyethylene sheath and a poly(ethylene terephthalate) core. The total polymer throughput per spin pack capillary was 1.0 g/min for the 17 g/m² basis weight web and 1.0 g/min for the 24 g/m² web. The polymers were metered to provide filament fibers that were 30% polyethylene (sheath) and 70% polyester (core), based on fiber weight. The filaments were cooled in a 15 inch (38.1 cm) long quenching zone with quenching air provided from two opposing quench boxes a temperature of 12° C and velocity of 1 m/sec. The filaments passed into a pneumatic draw jet spaced 20 inches (50.8 cm) below the capillary openings of the spin pack where the filaments were drawn at a rate of approximately 9000 m/min. The resulting smaller, stronger substantially continuous filaments were deposited onto a laydown belt with vacuum suction. The fibers in the two webs (17 g/m² and 24 g/m² basis weights) had an effective diameter in the range of 9 to12 microns. The resulting webs were separately passed between two thermal bonding rolls to lightly tack the web together for transport using a point bonding pattern at a temperature of 100° C and a nip pressure of 100 N/cm. The line speed during bonding was 206 m/min for the 17 g/m² basis weight web and 146 m/min for the 24 g/m² basis weight web. The lightly bonded spunbond webs were each collected on a roll.

The composite nonwoven sheet was prepared by unrolling the 17 g/m² basis weight spunbond web onto a moving belt. The meltblown bicomponent web was unrolled and laid on top of the moving spunbond web. The second roll of the 24 g/m² basis weight spunbond web was unrolled and laid on top of the spunbond-meltblown web to produce a spunbond-meltblown-spunbond composite nonwoven web. The composite sheet was thermally bonded between an engraved oil-heated metal calender roll and a smooth oil-heated metal calender roll. Both rolls had a diameter of 466 mm. The engraved roll had a chrome-coated non-hardened steel surface with a diamond pattern having a point size of 0.466 mm², a point depth of 0.86 mm, a point spacing of 1.2 mm, and a bond area of 14.6%. The smooth roll had a hardened steel surface. The composite web was bonded at a temperature of 110 °C, a nip pressure of 350 N/cm, and a line speed of 20 m/min. The bonded composite sheet was collected on a roll. The final basis weight of this composite nonwoven sheet was 58 g/m². The grab tensile properties of the sheet are reported in Table 1.

### EXAMPLES 2 and 3

Meltblown bicomponent fibers were formed according to the procedure of Example 1 except that the weight ratio of the poly(ethylene terephthalate) component to the polyethylene/poly(butylene terephthalate) biconstituent blend component was adjusted from 90:10 (Example 1) to 80:20 and 70:30 for Examples 2 and 3 respectively. The grab tensile properties for the meltblown web and the composite sheet are reported in Table 1.

### EXAMPLE 4

Meltblown bicomponent fibers were formed according to the procedure of Example 1 except that the poly(butylene terephthalate) in the polyethylene/poly(butylene terephthalate) biconstituent blend component was replaced with poly(ethylene terephthalate) with an intrinsic viscosity of 0.53 (as measured in U.S. Patent 4,743,504, available from DuPont as Crystar® polyester (Merge 3949). Also, the ratio of the polyethylene to the poly(ethylene terephthalate) in the polyethylene/poly(ethylene terephthalate) biconstituent blend component was adjusted 60:40. The attenuating air during melt spinning was supplied at a rate of 450 standard cubic feet per minute (13 m³/min) instead of 425 standard cubic feet per minute (12 m³/min). The grab tensile properties of the web is reported in Table 1. No composite sheets were made.

### EXAMPLES 5 AND 6

Meltblown bicomponent fibers were formed according to the procedure of Example 4 except that the ratio of the poly(ethylene terephthalate) component to the polyethylene/poly(ethylene terephthalate) biconstituent blend component was adjusted to 80:20 and 70:30 for Examples 5 and 6, respectively. The grab tensile properties for the meltblown web are reported in Table 1.

### EXAMPLE 7

Meltblown bicomponent fibers were made with a first polymer component of poly(ethylene terephthalate) and a second polymer component of polyethylene. The poly(ethylene terephthalate) component was made from poly(ethylene terephthalate) with an intrinsic viscosity of 0.53 (as measured in U.S. Patent 4,743,504, available from DuPont as Crystar® polyester (Merge 4449). The polyethylene component was made from linear low density polyethylene with a melt index of 150 g/10 minutes (measured according to ASTM D-1238), available from Dow Chemical Company as ASPUN.

The first and second polymer components were separately extruded, filtered and metered to a bicomponent spin pack arranged to provide a side-by-side filament cross-section. The die of the spin pack was heated to 600 °F (315 °C). The die had 624 capillary openings arranged in a 20.8 inch (52.8 cm) line. The polymers were spun through each capillary at a polymer throughput rate of 0.80 g/hole/min. Attenuating air was heated to a temperature of 615° F (323 °C) and supplied at a pressure of 8 psi (55.1 kPa) to two 1.5mm wide air channels. The two air channels ran the length of the 20.8 inch line of capillary openings, with one channel on each side of the line of capillaries set back 1.5mm from the capillary openings. The poly(ethylene terephthalate) was supplied to the spin pack at a rate of 27 kg/hr and the polyethylene/poly(butylene terephthalate) was supplied to the spin pack at a rate of 3.0 kg/hr. A bicomponent meltblown web was produced that was 90 weight percent poly(ethylene terephthalate) and 10 weight percent polyethylene. The filaments were collected on a moving forming screen to produce a meltblown web. The meltblown web was collected on a roll and had a basis weight of 17 g/m². The grab tensile properties of the web is reported in Table 1.

### EXAMPLE 8

Example 8 was produced in the same way as Example 7 except that the poly(ethylene terephthalate) was supplied to the spin pack at a rate of 24 kg/hr and the polyethylene/poly(butylene terephthalate) was supplied to the spin pack at a rate of 6.0 kg/hr.

### COMPARATIVE EXAMPLE A

Meltblown monocomponent fibers were formed according to the procedure of Example 1 except that the polyethylene/poly(ethylene terephthalate) biconstituent blend component was replaced with the same poly(ethylene terephthalate) used in the poly(ethylene terephthalate) component. The attenuating air during melt spinning was supplied at a rate of 225 standard cubic feet per minute (6.4 m³/min) instead of 425 standard cubic feet per minute (12 m³/min). The grab tensile properties of the web is reported in Table 1. No composite sheets were made.

Table 1 shows that the grab tensile properties of Examples 1-8 are higher than the Comparative Example A.

**TABLE 1**

| MELTBLOWN WEB AND SMS COMPOSITE PROPERTIES | | | | | | | | |
|---|---|---|---|---|---|---|---|---|
| Example | % of Fiber as Blend Component | % PE in Blend Component | % PBT in Blend Component | % PET in Blend Component | Grab Tensile MD(N)in Meltblown Web | Grab Tensile XD (N) in Meltblown Web | Grab Tensile MD(N)in SMS Composite | Grab Tensile XD (N) in SMS Composite |
| 1 | 10 | 90 | 10 | 0 | 4.67 | 8.94 | 96.1 | 60.1 |
| 2 | 20 | 90 | 10 | 0 | 8.32 | 8.54 | 103.2 | 57.9 |
| 3 | 30 | 90 | 10 | 0 | 12.15 | 11.17 | 113.0 | 62.3 |
| 4 | 10 | 60 | 0 | 40 | 8.19 | 8.90 | | |
| 5 | 20 | 60 | 0 | 40 | 13.31 | 10.28 | | |
| 6 | 30 | 60 | 0 | 40 | 11.21 | 8.86 | | |
| 7 | 10 | 100 | 0 | 0 | 9.52 | 6.75 | | |
| 8 | 20 | 100 | 0 | 0 | 9.63 | 6.62 | | |
| A | 0 | 0 | 0 | 0 | 0.90 | 2.19 | | |

| | | | | | | | | |
|---|---|---|---|---|---|---|---|---|
| PE = polyethylene PET = poly(ethylene terephthalate) PBT = poly(butylene terephthalate) MD = machine direction XD = cross direction | | | | | | | | |

## Claims

1. A multiple component meltblown fiber comprising a first fiber portion of between 70% to 98% by weight, based on the total weight of the fiber, of a first polymer component containing at least 80% by weight of polyester polymer and a second fiber portion of between 30% to 2% by weight, based on the total weight of the fiber, of a second polymer component containing at least 20% by weight of polyethylene polymer, and wherein some of the second fiber portion is located along the surface of the fiber.

2. The meltblown fiber of claim 1 wherein said first fiber portion is between 80% to 98% by weight of said first polymer component and said second fiber portion is between 20% to 2% by weight of said second polymer component.

3. The meltblown fiber of claim 1 wherein said first fiber portion is between 90% to 98% by weight of said first polymer component and said second fiber portion is between 10% to 2% by weight of said second polymer component.

4. The meltblown fiber of claim 1 wherein said polyester polymer is selected from the group of poly(ethylene terephthalate), poly(trimethylene terephthalate), poly(butylene terephthalate), and copolymers and terpolymers thereof.

5. The meltblown fiber of claim 4 wherein said polyester polymer is poly(ethylene terephthalate).

6. The meltblown fiber of claim 4 wherein said polyester polymer is poly(butylene terephthalate).

7. The meltblown fiber of claim 1 wherein the cross-sectional shape of the fiber is a side-by-side configuration of said first and second fiber portions.

8. The meltblown fiber of claim 1 wherein the cross-sectional shape of the fiber is sheath/core configuration of said first and second fiber portions.

9. A web of multiple component meltblown fibers, each of said fibers comprising a first fiber portion of between 70% to 98% by weight, based on the total weight of the fiber, of a first polymer component containing at least 80% by weight of polyester polymer and a second fiber portion of between 30% to 2% by weight, based on the total weight of the fiber, of a second polymer component containing at least 20% by weight of polyethylene polymer, and wherein some of the second fiber portion is located along the surface of the fiber.

10. The web of claim 9 wherein said meltblown fibers comprise between 80% to 98% by weight of said first polymer component and said second fiber portion is between 20% to 2% by weight of said second polymer component.

11. The web of claim 9 wherein said meltblown fibers comprise between 90% to 98% by weight of said first polymer component and said second fiber portion is between 10% to 2% by weight of said second polymer component.

12. The web of claim 9 wherein said web has a machine direction and a cross direction grab tensile strength of at least 5 N.

13. A composite sheet comprising:
a first fibrous layer having a first side and an opposite second side;
a second fibrous layer bonded to said first side of said first fibrous layer;
said first fibrous layer being a web comprised of multiple component meltblown fibers, each of said fibers comprising a first fiber portion of between 70% to 98% by weight, based on the total weight of the fiber, of a first polymer component containing at least 80% by weight of polyester polymer and a second fiber portion of between 30% to 2% by weight, based on the total weight of the fiber, of a second polymer component containing at least 20% by weight of polyethylene polymer, and wherein some of the second fiber portion is located along the surface of the fiber;
said second fibrous layer comprised of at least 95% by weight of meltspun polymer fibers;
said composite sheet having a basis weight of less than 120 g/m², and a machine direction and a cross direction grab tensile strength of at least 35 N.

## Patentansprüche

1. Mehrere Komponenten umfassende, aus der Schmelze geblasene Faser, welche enthält; einen ersten Faseranteil zwischen 70 Gewichtsprozent bis 98 Gewichtsprozent, bezogen auf das gesamte Gewicht der Faser, einer ersten Polymerkomponente, die mindestens 80 Gewichtsprozent eines Polyesterpolymers enthält, und einen zweiten Faseranteil zwischen 30 Gewichtsprozent bis 2 Gewichtsprozent, bezogen auf das gesamte Gewicht der Faser, einer zweiten Polymerkomponente, die mindestens 20 Gewichtsprozent eines Polyethylenpolymers enthält, und bei welcher sich ein wenig des zweiten Faseranteil entlang der Oberfläche der Faser befindet.

2. Schmelzgeblasene Faser gemäß Anspruch 1, bei welcher der erste Faseranteil zwischen 80 Gewichtsprozent bis 98 Gewichtsprozent der ersten Polymerkomponente liegt und der zweite Faseranteil zwischen 20 Gewichtsprozent bis 2 Gewichtsprozent der zweiten Polymerkomponente liegt.

3. Schmelzgeblasene Faser gemäß Anspruch 1, bei welcher der erste Faseranteil zwischen 90 Gewichtsprozent bis 98 Gewichtsprozent der ersten Polymerkomponente liegt und der zweite Faseranteil zwischen 10 Gewichtsprozent bis 2 Gewichtsprozent der zweiten Polymerkomponente liegt.

4. Schmelzgeblasene Faser gemäß Anspruch 1, bei welcher das Polyesterpolymer ausgewählt wird aus der Gruppe bestehend aus Poly(ethylenterephthalat), Poly(trimethylenterephthalat), Poly(butylenterephthalat) und aus Copolymeren und Terpolymeren derselben.

5. Schmelzgeblasene Faser gemäß Anspruch 4, bei welcher das Polyesterpolymer aus Poly(ethylenterephthalat) besteht.

6. Schmelzgeblasene Faser gemäß Anspruch 4, bei welcher das Polyesterpolymer aus Poly(butylenterephthalat) besteht.

7. Schmelzgeblasene Faser gemäß Anspruch 1, bei welcher die Querschnittsform der Faser eine Seite-an-Seite Konfiguration des ersten und des zweiten Faseranteils darstellt.

8. Schmelzgeblasene Faser gemäß Anspruch 1, bei welcher die Querschnittsform der Faser eine Mantel/Kern Konfiguration des ersten und des zweiten Faseranteils darstellt.

9. Netzstruktur aus mehrere Komponenten umfassenden, aus der Schmelze geblasenen Fasern, wobei eine jede dieser Fasern enthält; einen ersten Faseranteil zwischen 70 Gewichtsprozent bis 98 Gewichtsprozent, bezogen auf das gesamte Gewicht der Faser, einer ersten Polymerkomponente, die mindestens 80 Gewichtsprozent eines Polyesterpolymers enthält, und einen zweiten Faseranteil zwischen 30 Gewichtsprozent bis 2 Gewichtsprozent, bezogen auf das gesamte Gewicht der Faser, einer zweiten Polymerkomponente, die mindestens 20 Gewichtsprozent eines Polyethylenpolymers enthält, und bei welcher sich ein wenig von dem zweiten Faseranteil entlang der Oberfläche der Faser befindet.

10. Netzstruktur gemäß Anspruch 9, bei welcher die schmelzgeblasenen Fasern zwischen 80 Gewichtsprozent bis 98 Gewichtsprozent der ersten Polymerkomponente enthalten und der zweite Faseranteil zwischen 20 Gewichtsprozent bis 2 Gewichtsprozent der zweiten Polymerkomponente liegt.

11. Netzstruktur gemäß Anspruch 9, bei welcher die schmelzgeblasenen Fasern zwischen 90 Gewichtsprozent bis 98 Gewichtsprozent der ersten Polymerkomponente enthalten und der zweite Faseranteil zwischen 10 Gewichtsprozent bis 2 Gewichtsprozent der zweiten Polymerkomponente liegt.

12. Netzstruktur gemäß Anspruch 9, bei welcher die Netzstruktur in der Richtung der Maschine und quer zu der Richtung der Maschine eine Greifzugfestigkeit von mindestens 5 N aufweist.

13. Verbundfolie, welche umfasst:
eine erste Faserlage mit einer ersten Seite und einer gegenüberliegenden zweiten Seite;
eine zweite Faserlage, die mit der ersten Seite der besagten ersten Faserlage verbunden ist;
wobei die erste Faserlage aus einer Netzstruktur besteht, welche mehrere Komponenten von aus der Schmelze geblasenen Fasern aufweist, von denen eine jede Faser einen ersten Faseranteil umfasst von zwischen 70 Gewichtsprozent bis 98 Gewichtsprozent, bezogen auf das gesamte Gewicht der Faser, einer ersten Polymerkomponente, die mindestens 80 Gewichtsprozent eines Polyesterpolymers enthält, und einen zweiten Faseranteil umfasst von zwischen 30 Gewichtsprozent bis 2 Gewichtsprozent, bezogen auf das gesamte Gewicht der Faser, einer zweiten Polymerkomponente, die mindestens 20 Gewichtsprozent eines Polyethylenpolymers enthält, und bei welcher sich ein wenig von dem zweiten Faseranteil entlang der Oberfläche der Faser befindet;
die zweite Faserlage mindestens 95 Gewichtsprozent an schmelzgesponnenen Polymerfasern enthält,
wobei die Verbundfolie ein Basisgewicht von weniger als 120 g/m² aufweist und in der Richtung der Maschine und quer zu der Richtung der Maschine eine Greifzugfestigkeit von mindestens 35 N besitzt.

## Revendications

1. Fibre réalisée par fusion-soufflage à composants multiples comprenant une première portion de fibre entre 70% et 98% en poids, sur la base du poids total de la fibre, d'un premier composant de polymère contenant au moins 80% en poids de polymère de polyester et une deuxième portion de fibre entre 30% et 2% en poids, sur la base du poids total de la fibre, d'un deuxième composant de polymère contenant au moins 20% en poids de polymère de polyéthylène, et dans laquelle une partie de la deuxième portion de fibre est localisée le long de la surface de la fibre.

2. Fibre réalisée par fusion-soufflage suivant la revendication 1, dans laquelle ladite première portion de fibre est entre 80% et 98% en poids dudit premier composant de polymère et ladite deuxième portion de fibre est entre 20% et 2% en poids dudit deuxième composant de polymère.

3. Fibre réalisée par fusion-soufflage suivant la revendication 1, dans laquelle ladite première portion de fibre est entre 90% et 98% en poids dudit premier composant de polymère et ladite deuxième portion de fibre est entre 10% et 2% en poids dudit deuxième composant de polymère.

4. Fibre réalisée par fusion-soufflage suivant la revendication 1, dans laquelle ledit polymère de polyester est choisi dans le groupe de poly(éthylène téréphtalate), de poly(triméthylène téréphtalate), de poly(butylène téréphtalate) et de copolymères et de terpolymères de ceux-ci.

5. Fibre réalisée par fusion-soufflage suivant la revendication 4, dans laquelle ledit polymère de polyester est un poly(éthylène téréphtalate).

6. Fibre réalisée par fusion-soufflage suivant la revendication 4, dans laquelle ledit polymère de polyester est un poly(butylène téréphtalate).

7. Fibre réalisée par fusion-soufflage suivant la revendication 1, dans laquelle la forme de la section transversale de la fibre est une configuration côte à côte desdites première et deuxième portions de fibre.

8. Fibre réalisée par fusion-soufflage suivant la revendication 1, dans laquelle la forme de la section transversale de la fibre est une configuration enveloppe/coeur desdites première et deuxième portions de fibre.

9. Bande de fibres réalisées par fusion-soufflage à composants multiples, chacune desdites fibres comprenant une première portion de fibre entre 70% et 98% en poids, sur la base du poids total de la fibre, d'un premier composant de polymère contenant au moins 80% en poids de polymère de polyester et une deuxième portion de fibre entre 30% et 2% en poids, sur la base du poids total de la fibre, d'un deuxième composant de polymère contenant au moins 20% en poids de polymère de polyéthylène, et dans laquelle une partie de la deuxième portion de fibre est localisée le long de la surface de la fibre.

10. Bande suivant la revendication 9, dans laquelle lesdites fibres réalisées par fusion-soufflage comprennent entre 80% et 98% en poids dudit premier composant de polymère et ladite deuxième portion de fibre est entre 20% et 2% en poids dudit deuxième composant de polymère.

11. Bande suivant la revendication 9, dans laquelle lesdites fibres réalisées par fusion-soufflage comprennent entre 90% et 98% en poids dudit premier composant de polymère et ladite deuxième portion de fibre est entre 10% et 2% en poids dudit deuxième composant de polymère.

12. Bande suivant la revendication 9, où ladite bande présente une résistance à la traction d'arrachage dans la direction machine et la direction transversale d'au moins 5 N.

13. Feuille composite comprenant:
une première couche fibreuse possédant un premier côté et un deuxième côté opposé;
une deuxième couche fibreuse collée audit premier côté de ladite première couche fibreuse;
ladite première couche fibreuse étant une bande composée de fibres réalisées par fusion-soufflage à composants multiples, chacune desdites fibres comprenant une première portion de fibre entre 70% et 98% en poids, sur la base du poids total de la fibre, d'un premier composant de polymère contenant au moins 80% en poids de polymère de polyester et une deuxième portion de fibre entre 30% et 2% en poids, sur la base du poids total de la fibre, d'un deuxième composant de polymère contenant au moins 20% en poids de polymère de polyéthylène, et dans laquelle une partie de la deuxième portion de fibre est localisée le long de la surface de la fibre;
ladite deuxième couche fibreuse étant composée d'au moins 95% en poids de fibres de polymère filées par fusion;
ladite feuille composite possédant une masse surfacique de moins de 120 g/m² et une résistance à la traction d'arrachage dans la direction machine et la direction transversale d'au moins 35 N.
